# EUROPEAN PATENT SPECIFICATION

(11) **EP 4 225 038 B1**
(45) Date of publication and mention of the grant of the patent: **18.11.2026**
(21) Application number: 21783031.4
(22) Date of filing: 11.10.2021
(51) Int. Cl.: A23C 11/02, A23P 10/40, A23L 9/20, A23C 11/10, A23J 3/14, A23P 30/40

(54) **FOAMING INGREDIENT**
SCHÄUMENDER BESTANDTEIL
INGRÉDIENT MOUSSANT

(30) Priority: 12.10.2020 EP 20201263
(43) Date of publication of application: 16.08.2023
(60) Divisional application: 26154430.8 / 4 725 324
(73) Proprietor: Société des Produits Nestlé S.A., 1800 Vevey (CH)
(72) Inventor: DUPAS-LANGLET, Marina, 1073 Savigny (CH); MEUNIER, Vincent Daniel Maurice, 1066 EPALINGES (CH); BRÜTSCH, Linda, 1010 Lausanne (CH); SCHMITT, Christophe Joseph Etienne, 1077 SERVION (CH); AMAGLIANI, Luca, 1010 Lausanne (CH)
(74) Representative: Ly, Camille
(86) International application number: PCT/EP2021/078043
(87) International publication number: WO 2022/078954

(56) References cited:
- US-A1- 2006 110 516
- US-A1- 2020 187 528

## Description

### Field of the Invention

The present invention relates to a method for preparing a porous soluble foaming ingredient containing entrapped gas.

### Background of the Invention

Soluble foaming ingredients or foaming creamer powders which, upon addition of a liquid, are able to provide a creamy foam have many uses. For example, these foaming ingredients may be used to provide foam in powdered milk shakes and cappuccino beverages. Soluble coffee beverage products which produce cappuccino beverages are usually a dry mix of coffee powder, a soluble creamer base, sugar and a foaming ingredient. The soluble foaming ingredient may contain pockets of gas which, upon dissolution of the powder, produce foam. Therefore, upon the addition of water or milk (usually hot), a whitened coffee beverage, which has a foam on its upper surface, is formed; the beverage resembling, to a greater or lesser extent, traditional Italian cappuccino. Examples of these gassed soluble beverage products are described in European patent applications No 0154192, 0458310 and 1206193. Soluble beverage creamers which contain inorganic foaming agents are also available.

Consumers are taking a closer look at their nutritional habits, increasingly limiting their meat intake and finding plant-based alternatives more appealing, whether for health or ethical reasons. Certain consumers do not want to consume dairy products because of their animal origin, for example due to lactose intolerance or to dairy allergies. They may also see potential environmental sustainability issues. However milk, in particular milk protein, plays a key role in the functionality of gassed soluble foaming ingredients. The milk protein stabilizes the formation and retention of closed pores within the foaming ingredient, permits the addition of additional gas under pressure and contributes to the foam quality when the ingredient is dissolved.

US 2020/0187528 describes producing water-soluble porous particles for beverage powders by mixing the ingredients to form an aqueous solution, dissolving gas into the solution, and spray-drying it to create closed-porosity particles that float in water. The document explains that the process includes high-shear mixing of the ingredients, incorporation of gas into the solution until fully dissolved, and spray-drying in a closed-top one-stream dryer to form the porous particles.

US 2006/0110516 discloses a foaming ingredient composed essentially of proteins, optionally with plasticizers, forming the walls of gas-containing vacuoles that generate foam upon dissolution in beverages. The document further describes producing this ingredient by spray-drying a protein solution to form porous particles, then exposing the dried powder to gas so that the vacuoles take up and retain the gas, yielding a foaming material suitable for use in creamers and instant drink powders.

There is a need to find foaming ingredients that do not contain milk, but which equal, or at least come close to, the performance of the dairy-based ingredients.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide a solution to overcome at least some of the inconveniences described above, or at least to provide a useful alternative. The object of the present invention is achieved by the subject matter of the independent claims. The dependent claims further develop the idea of the present invention.

Accordingly, the invention relates to a method for preparing a porous soluble foaming ingredient comprising the steps of;
a' subjecting a plant protein selected from the group consisting of pea protein, fava bean protein, chick pea protein, potato protein and combinations of these to homogenization performed by a high pressure homogenizer,
a. spray drying a pressurized gassed aqueous mixture comprising the homogenized plant protein and one or more carbohydrates to form a porous powder having a glass transition temperature, wherein the aqueous mixture comprises 3 to 40 % on a dry weight basis of plant protein;
b. subjecting the porous powder to a gas under pressure, the porous powder being at a temperature above its glass transition temperature such that the closed pores present in the porous powder are filled with the gas under pressure;
c. cooling the porous powder to below its glass transition temperature; and
d. releasing the pressure.

Porous soluble foaming ingredients containing entrapped gas (for example gas under pressure) are sometimes referred to as "foam boosters". The inventors have found that proteins play a number of different roles in a foam booster which has a continuous phase primarily composed of carbohydrate. Proteins stabilize the formation of closed pores in the solid foam booster, maintain the closed pore structure when the continuous phase is heated to allow pressurized gas to be charged into the booster, and when the booster is dissolved they affect both the formation and the stability of the foam generated.

It has been surprisingly found by the inventors that porous soluble foaming ingredients comprising plant proteins such as pea and fava bean have similar overall closed porosity to those made with the dairy protein casein, but have fewer large closed pores. Without wishing to be bound by theory, the inventors believe that this is responsible for the generation of a finer, more appealing foam structure on dissolution. The inventors also found that porous soluble foaming ingredients comprising plant proteins such as pea and fava bean generate a higher foam volume than the dairy protein casein, the foam being stiffer and more long-lasting.

### Brief Description of the Drawings

Figure 1 shows scanning electron microscope images of sections through porous powders containing different proteins; V1-Sodium caseinate, V2-Fava protein, V3-Pea protein isolate, V4-Soy protein isolate and V5-Hydrolysed rice protein.
Figure 2 is a plot of the measured foam volume for model cappuccino powders prepared with porous soluble foaming ingredients containing different proteins; V1-Sodium caseinate, V2-Fava protein, V3-Pea protein isolate, V4-Soy protein isolate, V5-Hydrolysed rice protein, V6-Chick pea protein concentrate and V7-potato protein isolate.

### Detailed Description of the invention

Consequently the description provides details of a porous soluble foaming ingredient having a closed porosity between 20 and 80% for example between 30 and 60%, for further example between 35 and 55%, containing entrapped gas at above atmospheric pressure, the ingredient comprising 60 to 97 % on a dry weight basis of one or more carbohydrates (for example 80 to 96 %) and 3 to 40 % on a dry weight basis of plant protein, wherein the plant protein is selected from the group consisting of pea protein, fava bean protein, chickpea protein, potato protein and combinations of these and the porous soluble foaming ingredient has a glass transition temperature (for example as measured by Differential Scanning Calorimetry) between 50 and 90°C, for example between 65 and 75°C.

The porous soluble foaming ingredient has a closed porosity between 20 and 80%, contains entrapped gas at above atmospheric pressure, the ingredient comprising
60 to 97 % on a dry weight basis of one or more carbohydrates;
and 3 to 40 % on a dry weight basis of plant protein;
wherein the plant protein is selected from the group consisting of pea protein, fava bean protein, chickpea protein, potato protein and combinations of these, and the porous soluble foaming ingredient has a glass transition temperature between 50 and 90°C.

The porous soluble foaming ingredient described herein comprises 3 to 40 % on a dry weight basis of plant protein, for example 4 to 20%, for example 5 to 15%, for example 7 to 12%, for further example 8.5 to 9.5%. The inventors have found that increasing the level of protein increases the foam volume on reconstitution of the fresh ingredient, but higher levels of protein lead to poor gas retention during storage of the porous soluble foaming ingredient. The composition has the advantage of providing good foam volume on reconstitution, but also good performance after storage times of many months.

In the context of the present invention the term "soluble" refers to being soluble in water. The porous foaming ingredient may for example have a solubility of at least 20 g/100 mL water at 25°C. The term ingredient refers to a component of a food or beverage product. The ingredient may itself comprise multiple components. A foaming ingredient is an ingredient capable of generating a foam, for example when added to water. The foaming ingredient may be capable of generating a foam without the application of mechanical energy such as whipping.

The porous soluble foaming ingredient may have closed and open pores. In the context of the present invention, the term "open pores" is used to define voids present in the particles having a connection to the surface of the particle. The term "closed pores" is used to define completely closed voids. Thus liquids such as water may not penetrate into the closed pores before the particle dissolves.

Closed porosity is calculated from the matrix density and the apparent density, according to the following equation: $Closed porosity = 100 . \left(1-\frac{{ρ}_{apparent}}{{ρ}_{matrix}}\right)$

The matrix density (ρₘₐₜᵣᵢₓ) is the density of the solid material forming the porous ingredient, sometimes referred to as the "true density". The matrix density may be determined using a density meter, for example a DMA 4500 M (Anton Paar, Switzerland AG).

The apparent density (ρₐₚₚₐᵣₑₙₜ), sometimes called "skeletal density", is the ratio of the mass of the ingredient to the sum of the ingredient volume including closed pores. The apparent density may be obtained by measuring the volume of a weighed amount of the ingredient using a helium pycnometer, for example an Accupyc 1330 Pycnometer (Micrometrics Instrument Corporation, US).

The porous soluble foaming ingredient has a closed porosity closed porosity between 20 and 80%, for example between 25 and 60%, for further example between 30 and 50%. The closed porosity may be measured by a combination of pulsed excitation and helium pycnometry.

The porous soluble foaming ingredient contains entrapped gas at above atmospheric pressure, the gas being entrapped inside the closed pores. The term atmospheric pressure refers to a pressure of 101.3 kPa absolute.

According to the present invention the term "glass transition temperature" as used herein is to be interpreted as is commonly understood, as the temperature at which an amorphous solid becomes soft upon heating or brittle upon cooling. The glass transition temperature is always lower than the melting temperature (Tₘ) of the crystalline state of the material. An amorphous material can therefore be conventionally characterised by a glass transition temperature, denoted T_{g}. A material is in the form of an glassy solid when it is below its glass transition temperature. The foaming ingredient may be a glassy solid.

The carbohydrates according to the invention are not particularly limited as long as they provide a glass transition temperature between 50 and 90°C. The carbohydrate composition may be chosen to arrive at the desired glass transition temperature in the ways known in the art. Models are well known to help in this process such as the Gordon-Taylor equation, combined with literature values of the glass transition temperatures of individual carbohydrates. The continuous phase of the porous soluble foaming ingredient is characterised as having a glass transition temperature between 50 and 90°C, for example between 65 and 75°C.

Several techniques can be used to measure the glass transition temperature and any available or appropriate technique can be used, including differential scanning calorimetry (DSC) and dynamic mechanical thermal analysis (DMTA).

The carbohydrates according to the invention may be saccharides. In an embodiment the carbohydrates are selected from glucans, fructans, sucrose and combinations of these. In an embodiment the carbohydrates are selected from glucans, fructans and combinations of these. In an embodiment the carbohydrates comprise (for example consist of) glucan polymers and optionally sucrose. In an embodiment the carbohydrates comprise hydrolysed starch, for example glucose syrup, such as glucose syrup with a DE between 20 and 70.

Fava beans, from the plant *Vicia faba* are also known in the culinary sense as faba beans or broad beans. The plant protein is pea protein, fava bean protein, chick pea protein or potato protein. In an embodiment the plant protein is pea protein, fava bean protein or potato protein. In an embodiment the plant protein is selected from the group consisting of pea protein, fava bean protein and combinations of these. In an embodiment the plant protein is fava bean protein. In an embodiment the plant protein is pea protein. In an embodiment the plant protein is chick pea protein. In an embodiment the protein is potato protein. In an embodiment the plant protein is pea protein, fava bean protein or potato protein. The plant protein may be in any form, for example it may be selected from the group consisting of native plant protein, plant protein isolate, plant protein concentrate, hydrolysed plant protein, fractionated plant protein and combinations of these. In an embodiment the plant protein is a plant protein isolate or concentrate.

Many consumers avoid products which contain allergens. In common with other regulatory authorities, the UK Food Standards Agency lists allergens that food businesses must inform customers about if a food they provide contains them. These allergens are celery, cereals containing gluten, crustaceans, eggs, fish, lupin, milk, molluscs, mustard, peanuts, sesame, soybeans, and tree nuts. The porous soluble foaming ingredient is free from celery, cereals containing gluten, crustaceans, eggs, fish, lupin, milk, molluscs, mustard, peanuts, sesame, soybeans and tree nuts. For example the porous soluble foaming ingredient may be free from milk, peanuts and soybeans.

In the present specification, the term "milk" refers to dairy milk. When milk-like substances produced from plants are referred to, the term "plant milk" is used. Examples of plant milks include soy milk, oat milk and nut milks.

The porous soluble foaming ingredient has a moisture content between 0.5 and 6 %, for example between 1 and 5 %, for further example between 1.5 and 3 %.

The porous soluble foaming ingredient is suitable for persons following a vegan diet. Persons following a vegan diet avoid consuming all animal products, including meat, eggs and dairy products. The porous soluble foaming ingredient is free from animal proteins such as dairy proteins and egg proteins. The porous soluble foaming ingredient is free from lactose.

The entrapped gas of the porous soluble foaming ingredient is present in an amount to release at least 1 mL of gas (for example at least 2 mL of gas) at ambient conditions (e.g. 25°C and atmospheric pressure) per gram of ingredient upon addition of an aqueous liquid. The gas may be any suitable food grade gas. For example, the gas may be nitrogen, carbon dioxide or air, and mixtures of these gases. Gases which are substantially inert are preferred. To provide the enhanced foaming, the gas is introduced into the ingredient under pressure; for example at above about 1 bar gauge. The gas may be introduced into the ingredient at above about 5 bar gauge; for example at between about 10 bar gauge to about 200 bar gauge.

Introducing gas into the ingredient under pressure may be performed by heating a porous powder having a glassy continuous phase to a temperature above its glass transition temperature and then subjecting the porous powder to a gas under pressure. The pores of the powder are filled with gas under pressure and then the temperature of the powder is reduced to below its glass transition temperature to trap pressurized gas in the pores. The external pressure may be released simultaneously with the reduction in temperature or subsequently. An porous ingredient which has treated in this way if often referred to as having been "boosted" as the ingredient has a increased level of entrapped gas. It should be noted that it is the subsequent application of pressurized gas to the porous powder that makes it "boosted" (for example having entrapped gas present in an amount to release at least 1 ml of gas at ambient conditions per gram of ingredient upon addition of an aqueous liquid) rather than introducing pressurized gas to the aqueous mixture during spray-drying. Gas introduced to the aqueous mixture during spray drying serves (among other things) to foam the initial porous structure.

In the context of the present document the amount of gas being released from the porous soluble foaming ingredient is measured after the addition of aqueous liquid (for example water) to the foaming ingredient. A method for measuring the gas release is given below. Other methods may also be suitable.
1) Provide: A glass vial and a rubber cap for sealing it; a glass column having in the one end a funnel and a needle attached there to and in the other end a suction ball; a water bath, and a syringe.
2) Weigh precisely 1 to 4 g of foaming ingredient and introduce the foaming ingredient into a 20 mL glass vial and hermetically seal with a rubber cap. Adjust the volume of water in the glass column with the suction ball to exactly 25 mL (or record exact volume V₀).
3) Introduce the vial in the water bath vertically under the funnel. Pierce the rubber cap with the needle fixed at the column base and allow the air in the head space of the glass vial to escape into the funnel and glass column. Record V₁ which represents the volume in the head space of the vial.
4) Take away the vial from the needle while maintaining the vial under the funnel in the water bath: Inject exactly 5 g of water into the vial with a syringe through the rubber cap. Pierce again the cap with the fixed needle until no more gas bubble escape from the needle and measure the gas released into the glass column (V₂).
5) Take away the vial and put the thumb on the cap. Take the vial out of the bath while keeping the thumb on to the cap. Shake the vial to ensure good dissolution. Put the vial back under the funnel in the water batch and pierce again. Record V₃. The total volume of released gas (in ml) is V₃-V₁-5. The gas release per gram of foaming ingredient is obtained by dividing the total volume by the initial weigh of foaming ingredient.

The porous soluble foaming ingredient comprises less than 0.5 wt% fat, for example less than 0.1 wt.% fat, for example less than 0.05 wt.% fat. Fat tends to reduce the quantity of foam released.

The porous soluble foaming ingredient is in the form of a powder having a particle size distribution D_{3,2} between 10 and 500 µm. The average particle size D_{3,2} is sometimes called the Sauter mean diameter. The particle size distribution of the powder may be measured by laser light scattering.

The soluble foaming ingredient may have a porosity such that pores have a size distribution D_{3,2} between 0.1 and 40 µm. For the same overall closed porosity, smaller closed pores lead to a finer foam on dissolution. The pore size distribution may be measured by x-ray tomography, based on the void volume distribution.

A soluble beverage powder comprising the porous soluble foaming ingredient described herein may be prepared. For example the porous soluble foaming ingredient may be a component of a beverage powder mix. The soluble beverage powder comprises 15 wt% to 50 wt.% of the porous soluble foaming ingredient on a dry basis.

A soluble beverage powder may be a mix comprising the porous soluble foaming ingredient described herein, soluble coffee and powdered creamer. In particular, the soluble beverage powder is an instant cappuccino powder mix, for example comprising the porous soluble foaming ingredient, soluble coffee and a creamer. The instant cappuccino mix may be suitable for persons following a vegan diet.

The soluble beverage powder is a soluble creamer powder. Creamers are widely used as whitening agents with hot and cold beverages such as, for example, coffee, cocoa and tea. They are commonly used in place of milk and/or dairy cream. The porous soluble foaming ingredient may be dry mixed with a creamer component, agglomerated with a creamer component or creamer components may be included in the porous soluble foaming ingredient so as to prepare a soluble creamer powder.

A further example of a food powder comprises a porous soluble foaming ingredient described herein, for example a powder to be reconstituted as an aerated dessert.

The present invention provides a method for preparing a porous soluble foaming ingredient (for example the porous soluble foaming ingredient described herein) comprising the steps of;
a' subjecting a plant protein selected from the group consisting of pea protein, fava bean protein, chick pea protein, potato protein and combinations of these to homogenization performed by a high pressure homogenizer,
a. spray drying a pressurized gassed aqueous mixture comprising the homogenized plant protein and one or more carbohydrates to form a porous powder having a glass transition temperature, wherein the aqueous mixture comprises 3 to 40 % (for example 4 to 30%, for example 5 to 25%, for example 4 to 20%, for example 5 to 15%, for example 7 to 12%, for further example 8.5 to 9.5%) on a dry weight basis of plant protein;
b. subjecting the porous powder to a gas under pressure, the porous powder being at a temperature above its glass transition temperature such that the closed pores present in the porous powder are filled with the gas under pressure;
c. cooling the porous powder to below its glass transition temperature; and
d. releasing the pressure.

The aqueous mixture may comprise between 60 to 97 % (for example 80 to 96%) on a dry weight basis of one or more carbohydrates.

The homogenization is performed by a high pressure homogenizer, for example where a fluid is forced to pass through a small hole by applying high pressure. Surprisingly, the inventors have found that homogenization of the plant proteins in an aqueous mixture increases their solubility and their foaming performance. The plant proteins may be homogenized in the presence of carbohydrates or the carbohydrates may be added after homogenization.

The aqueous mixture may be gassed before or after being pressurized. Gas may be added to the aqueous mixture before or after subjecting the aqueous mixture to high pressure. If the gas is added to the aqueous mixture after subjecting the aqueous mixture to high pressure then the gas must be introduced at a pressure at least slightly above the pressure of the aqueous mixture. The aqueous mixture may be gassed with a gas selected from the group consisting of nitrogen, air, carbon dioxide, nitrous oxide and argon. The gas may be nitrogen. The aqueous mixture may be pressurized at between 50 and 300 bar, for example between 80 and 200 bar, for further example between 100 and to 150 bar.

The gas may be dissolved in the mixture before spray drying, the mixture comprising dissolved gas being held under high pressure up to the point of spraying. For example the gas may be nitrogen and it is added for as long as it takes to achieve full dissolution of gas in the said mixture. For example the time to reach full dissolution may be at least 2 minutes, for example at least 4 minutes, for further example at least 10 minutes, for further example at least 20 minutes, for further example at least 30 minutes.

The porous powder is subjected to a pressure of between 10 and 200 bar_{g}, for example between 20 and 70 bar_{g} (for example between 35 and 55 bar_{g}) and a temperature between 10 and 30 °C above the glass transition temperature of the porous powder, for example between 15 and 25 °C above the glass transition temperature of the porous powder. For example a porous powder having a glass transition temperature around 70°C may be subjected to gas under pressure with the porous powder being at a temperature of between 85 and 95°C . The gas filled into the porous powder may be selected from the group consisting of nitrogen, air, carbon dioxide, and argon. The gas may be nitrogen. Gases which are substantially inert are preferred.

Without wishing to be bound by theory, the gas under pressure is able to fill the closed pores of the porous ingredient because the matrix material making up the continuous phase of the ingredient is in the rubbery state, being above its glass transition temperature and becoming pervious to gas. Once the ingredient cools, the matrix material becomes glassy and traps the pressurized gas. The external pressure can then be released, leaving the closed pores of the ingredient containing gas under pressure. Alternatively, rapid release of pressure may be used to quench cool the powder.

In an embodiment the plant protein is selected from the group consisting of pea protein, fava bean protein and combinations of these. In an embodiment the plant protein is fava bean protein. In an embodiment the plant protein is pea protein.

The present invention provides a method for preparing a porous soluble foaming ingredient (for example the porous soluble foaming ingredient described herein) comprising the steps of;
a' subjecting a plant protein selected from the group consisting of pea protein, fava bean protein, chick pea protein, potato protein and combinations of these to homogenization performed by a high pressure homogenizer,
a. spray drying a pressurized gassed aqueous mixture comprising the homogenized plant protein and one or more carbohydrates to form a porous powder having a glass transition temperature, wherein the aqueous mixture comprises 3 to 40 % (for example 4 to 30%, for example 5 to 25%, for example 4 to 20%, for example 5 to 15%, for example 7 to 12%, for further example 8.5 to 9.5%) on a dry weight basis of plant protein ;
b. subjecting the porous powder to a gas under pressure, the porous powder being at a temperature above its glass transition temperature such that the closed pores present in the porous powder are filled with the gas under pressure;
c. cooling the porous powder to below its glass transition temperature; and
d. releasing the pressure.

Furthermore, the porous soluble foaming ingredient described herein is also used to prepare a foaming beverage.

Those skilled in the art will understand that they can freely combine all features of the present invention disclosed herein. In particular, features described for the product may be combined with the method of the present invention and vice versa. Further, features described for different embodiments of the present invention may be combined. Where known equivalents exist to specific features, such equivalents are incorporated as if specifically referred to in this specification.

Further advantages and features of the present invention are apparent from the figures and non-limiting examples.

### Examples

### Example 1: Foam boosters with different proteins

Porous soluble foaming ingredients (foam boosters) were prepared with different proteins. Glucose syrup and protein were mixed according to the table below. The glucose syrup (hydrolysed starch syrup) was a mixture of two different dextrose equivalent syrups, DE29 and DE47. Dextrose equivalent is an indication of the degree of hydrolysis applied to the starch, a 100DE syrup is completely hydrolysed to dextrose (glucose). Examples 1, V1, V4 and V5 are comparative examples:

| | Protein | Glucose syrup DE29 | Glucose syrup DE 47 | Protein |
|---|---|---|---|---|
| V1 | Sodium caseinate | 31.0 | 60.0 | 9.0 |
| V2 | Fava protein isolate | 31.0 | 60.0 | 9.0 |
| V3 | Pea protein isolate | 31.0 | 60.0 | 9.0 |
| V4 | Soy protein isolate | 31.0 | 60.0 | 9.0 |
| V5 | Hydrolysed rice protein | 30.0 | 58.0 | 12.0 |
| V6 | Chick Pea Protein concentrate | 30.0 | 58.0 | 12.0 |
| V7 | Potato Protein isolate | 31.0 | 60.0 | 9.0 |

The hydrolysed rice protein and the chick pea protein concentrate contained 60% protein, compared to 90% protein in the isolates. The quantity of protein was adjusted to arrive at the same total protein content for each recipe.

The mixtures were homogenized (200bars/50bars) using a PandaPlus Homogenius 2000. The mixtures were then heated at 75°C for 5 minutes to pasteurize them. The temperature was stabilized at 60 °C before spray-drying in a NIRO SD-6.3-N spray-dryer (GEA, Germany) to produce a porous powder. Nitrogen was injected at a rate of 0.5 NL/kg after the high pressure pump. The spraying pressure was 120-130 bars. Typical flowrate was 15 L/h.

The glass transition temperature of the powders were measured by differential scanning calorimetry (TA Instrument Q2000). A double scan procedure was used to erase the enthalpy of relaxation and get a better view on the glass transition. The scanning rate was 5 °C/min. The system was then cooled at 20 °C/min. The glass transition was detected during the second scan and defined as the onset of the step change of the heat capacity.

Closed porosity was measured as follows.

The matrix density is determined by DMA 4500 M (Anton Paar, Switzerland AG). The sample was introduced into a U-shaped borosilicate glass tube that is excited to vibrate at its characteristic frequency which depends on the density of the sample.

The apparent density of powders was measured by Accupyc 1330 Pycnometer (Micrometrics Instrument Corporation, US). The instrument determines density and volume by measuring the pressure change of helium in a calibrated volume. Measurement pressure was 10 psig. Instrument default setting was used for equilibration rate.

Closed porosity was calculated from the matrix density and the apparent density, according to the following equation: $Closed porosity = 100 . \left(1-\frac{{ρ}_{apparent}}{{ρ}_{matrix}}\right)$

The glass transition temperature and closed porosity of the powders are listed in the table below:

| | Protein | T_{g} [°C] | Closed porosity [%] |
|---|---|---|---|
| V1 | Sodium caseinate | 72.5 | 47.9 |
| V2 | **Fava protein isolate** | 61.5 | 48.1 |
| V3 | **Pea protein isolate** | 63.1 | 46.7 |
| V4 | Soy protein isolate | 70.7 | 46.0 |
| V5 | Hydrolysed rice protein | 78.5 | 50.0 |
| V6 | **Chick Pea Protein concentrate** | 75.4 | 46.3 |
| V7 | **Potato Protein isolate** | 75.6 | 47.4 |

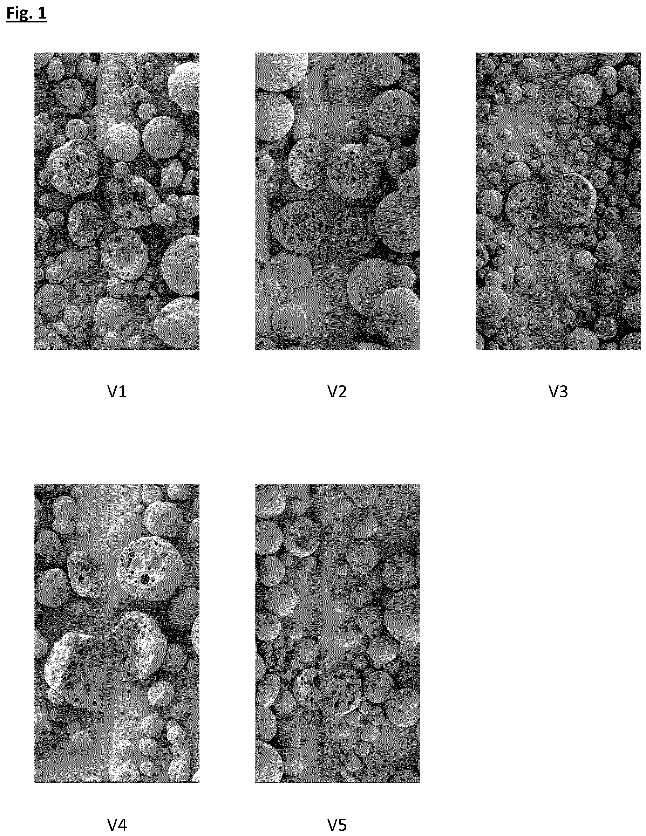

The internal structure of the porous powders were examined by scanning electron microscopy (Figure 1). It can be seen that V2 (fava) and V3 (pea) have fewer large closed pores than the other samples.

A 1 kg batch of each powder was then subjected to nitrogen gas at a pressure of 45 bar and heated to a temperature around 20 °C above the measured glass transition temperature. The powder was vibrated during this process to prevent it sticking together. The powder was cooled to 20 °C before the pressure was released.

The foam volume generated by the different powders was evaluated by preparing a model cappuccino recipe. A dry mix was prepared of 1.9 g soluble coffee powder, 3.9 g booster powder, 4.6 g creamer powder and 5 g sucrose.

Reconstitution was performed in a parallel sided beaker with a diameter of 6.5 cm. Hot water at 85 °C was added to the dry mix in a beaker. Five seconds after the water addition the beverage was stirred clockwise 20 times and then counter-clockwise 20 times. After waiting 20 seconds for the foam the form, the beaker was stirred a further 5 times. The foam height was measured immediately. Each measurement was repeated in triplicate and an average taken. Results are presented in the table below:

| | Protein | Average Vol [mL] | Standard deviation |
|---|---|---|---|
| V1 | Sodium caseinate | 42.0 | 1.9 |
| V2 | **Fava protein isolate** | 60.8 | 5.0 |
| V3 | **Pea protein isolate** | 58.6 | 1.9 |
| V4 | Soy protein isolate | 44.2 | 1.9 |
| V5 | Hydrolysed rice protein | 33.2 | 0.0 |
| V6 | **Chick Pea Protein concentrate** | 42.0 | 1.9 |
| V7 | **Potato Protein Isolate** | 46.5 | 5.7 |

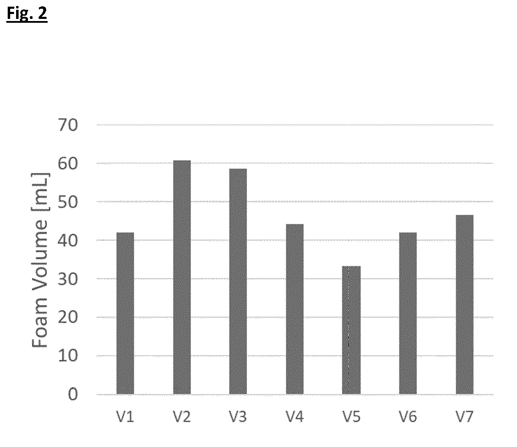

The foam volumes are plotted in Figure 2. With the same level of protein, model cappuccino foams produced from the booster powders with pea, fava and potato proteins had greater foam volume than those made with sodium caseinate, soy protein or hydrolyzed rice protein. A model cappuccino produced from the booster powder with chick pea protein had greater foam volume than those made with soy protein or hydrolyzed rice protein.

The foam stiffness was measured for 5 reconstituted samples. Viscosity analysis was performed using a Physica MCR 501 controlled shear-stress rheometer (Anton Paar GmbH, Graz, Austria). The upper geometry was a vane ST14/4W (SN3357) with a radius of 7.0 mm and a gap length of 35 mm. The measuring cup was a 250 ml beaker with a radius of 29 mm.

The vane was immersed up to the half the foam. Results of foam stiffness is twice the viscosity measurement values. When the foam volume was too low, the vane was only immersed up to one third and the foam stiffness is three times the viscosity measurement value.

In order to determine the foam stiffness, the shear rate was maintained at 0.02 s⁻¹ over 250 s. The final viscosity measurement was used to calculate the foam stiffness.

The results are the averages of 8 measurements.

| | Protein | Foam stiffness [Pa] | St.Dev [Pa] |
|---|---|---|---|
| V1 | Sodium caseinate | Not measurable | - |
| V2 | Fava protein isolate | 395.4 | 14.5 |
| V3 | Pea protein isolate | 392.4 | 65.5 |
| V4 | Soy protein isolate | 275.3 | 47.3 |
| V5 | Hydrolysed rice protein | 107.2 | 12.6 |

The sample prepared with sodium caseinate was too thin and unstable to be measured. With the same level of protein, model cappuccino foams produced from the booster powders with pea and fava proteins had greater foam stiffness than those made with soy protein or hydrolyzed rice protein.

### Example 2: Influence of protein content

Foam boosters were prepared with fava protein as for V2 in Example 1, except that four different levels of protein were used; 2%, 9%, 20% and 30%.

| | Protein | Average Vol [mL] | Standard deviation |
|---|---|---|---|
| V2a | Booster DE29 33% DE47 65% fava 2% | 42.0 | 1.9 |
| V2 | Booster DE29 31% DE47 60% fava 9% | 60.8 | 5.01 |
| V2b | Booster DE29 27% DE47 53% fava 20% | 58.6 | 1.9 |
| V2c | Booster DE29 24% DE47 46% fava 30% | 44.2 | 1.2 |

The entrapped gas was measured at 25°C as follows:
1) Provide: A glass vial and a rubber cap for sealing it; a glass column having in the one end a funnel and a needle attached there to and in the other end a suction ball; a water bath, and a syringe.
2) Weigh precisely 1g of foaming ingredient and introduce the foaming ingredient into a 20 mL glass vial and hermetically seal with a rubber cap. Adjust the volume of water in the glass column with the suction ball to exactly 25 mL (or record exact volume V₀).
3) Introduce the vial in the water bath vertically under the funnel. Pierce the rubber cap with the needle fixed at the column base and allow the air in the head space of the glass vial to escape into the funnel and glass column. Record V₁ which represents the volume in the head space of the vial.
4) Take away the vial from the needle while maintaining the vial under the funnel in the water bath: Inject 5.0 mL ± 0.1 mL of water into the vial with a syringe through the rubber cap. Pierce again the cap with the fixed needle until no more gas bubble escape from the needle and measure the gas released into the glass column (V₂).
5) Take away the vial and put the thumb on the cap. Take the vial out of the bath while keeping the thumb on to the cap. Shake the vial to ensure good dissolution. Put the vial back under the funnel in the water batch and pierce again. Record V₃. The total volume of released gas (in ml) is V₃-V₁-5. The gas release per gram of foaming ingredient is obtained by dividing the total volume by the initial weigh of foaming ingredient.

The measurement was repeated 3 times and an average taken, reported in mL/g.

The Gas Loss Kinetics (GLK), of the samples were measured. 5 g of booster was collected in 12 vials and the gas release was measured as above after 1, 3, 7 and 14 days, in triplicate. A diffusion model based on Fick's law was used to predict gas release after 1 year. The GLK in mL/g corresponds to the gas retained after a period of one year based on the diffusion model. The GLK in % corresponds to the gas loss in comparison to the initial amount, based on the diffusion model.

| | | Entrapped gas | GLK | GLK | Closed porosity | Tg |
|---|---|---|---|---|---|---|
| | Protein | mL/g | mL/g | % | % | °C |
| V2a | fava 2% | 2.5 | <1.0 | - | 47.3 | 65 |
| V2 | fava 9% | 9.4 | 2.8 | 66.6% | 46.2 | 79 |
| V2b | fava 20% | 6.9 | 0.4 | 93.8% | 48.7 | 73 |
| V2c | fava 30% | 15.7 | 0.0 | 99.3% | 59.3 | 75 |

It can be seen that high levels of protein result in poor gas retention after an extended period of storage.

Foam boosters were prepared with pea protein as for V3 in Example 1, except that three different levels of protein were used; 6%, 9% and 12%. The foam volume with 6% pea protein was 70% of that achieved at 9% pea protein, while the volume with 12% pea protein was 110%. However, the gas loss after one year of storage at ambient conditions was 26% for 6% pea protein, 35% for 9% pea protein and 39% for 12% pea protein. Increasing the pea protein content increases the initial foam volume but decreases the storage stability of the gassed powder.

### Example 3: Foam boosters with different carbohydrate mixtures

A foam booster was prepared with pea protein as for V3 in Example 1, except that a mixture of 82 wt.% 21DE glucose syrup and 9 wt.% sucrose was used with 9 wt.% pea protein isolate. The resulting closed porosity, entrapped gas and Gas Loss Kinetics are shown in the table below.

| | Ingredients | Closed porosity (%) | Entrapped gas (mL/g) | GLK (mL/g) |
|---|---|---|---|---|
| V3a | DE21 82%, sucrose 9%, pea protein isolate 9% | 47.8 | 8.7 | 6.7 |

## Claims

1. Method for preparing a porous soluble foaming ingredient comprising the steps of;
a'. subjecting a plant protein selected from the group consisting of pea protein, fava bean protein, chick pea protein, potato protein and combinations of these to homogenization performed by a high pressure homogenizer,
a. spray drying a pressurized gassed aqueous mixture comprising the homogenized plant protein, and one or more carbohydrates to form a porous powder having a glass transition temperature, wherein the aqueous mixture comprises 3 to 40 % on a dry weight basis of plant protein ;
b. subjecting the porous powder to a gas under pressure, the porous powder being at a temperature above its glass transition temperature such that the closed pores present in the porous powder are filled with the gas under pressure;
c. cooling the porous powder to below its glass transition temperature; and
d. releasing the pressure.

2. The method of claim 1 wherein the porous powder is subjected to a pressure of between 10 and 200 bar_{g} and a temperature between 10 and 30 °C above the glass transition temperature of the porous powder.

3. The method of claim 1 or 2, wherein the plant proteins are homogenized in the presence of carbohydrates.

## Patentansprüche

1. Verfahren zum Herstellen eines porösen löslichen schäumenden Inhaltsstoffes, umfassend die Schritte;
a'. Aussetzen eines Pflanzenproteins, aus der Gruppe ausgewählt, bestehend aus Erbsenprotein, Faberbohnenprotein, Kichererbsenprotein, Kartoffelprotein und Kombinationen dieser, einer Homogenisierung, die durch einen Hochdruckhomogenisator durchgeführt wird,
a. Sprühtrocknen einer unter Druck stehenden begasten wässrigen Mischung, umfassend das homogenisierte Pflanzenprotein und ein oder mehrere Kohlenhydrate, um ein poröses Pulver auszubilden, das eine Glasübergangstemperatur aufweist, wobei die wässrige Mischung zu 3 bis 40 % auf einer Trockengewichtsbasis Pflanzenprotein umfasst;
b. Aussetzen des porösen Pulvers eines unter Druck stehenden Gases, wobei sich das poröse Pulver eine Temperatur über seiner Glasübergangstemperatur aufweist, derart, dass die geschlossenen Poren, die in dem porösen Pulver gegenwärtig sind, mit dem unter Druck stehenden Gas gefüllt werden;
c. Abkühlen des porösen Pulvers auf unter seine Glasübergangstemperatur; und
d. Ablassen des Drucks.

2. Verfahren nach Anspruch 1, wobei das poröse Pulver einem Druck zwischen 10 und 200 bar_{g} und einer Temperatur zwischen 10 und 30 °C über der Glasübergangstemperatur des porösen Pulvers ausgesetzt wird.

3. Verfahren nach Anspruch 1 oder 2, wobei die Pflanzenproteine in Gegenwart von Kohlenhydraten homogenisiert werden.

## Revendications

1. Procédé permettant de préparer un ingrédient moussant soluble poreux comprenant les étapes consistant à ;
a'. soumettre une protéine végétale choisie dans le groupe constitué de protéine de pois, protéine de féveroles, protéine de pois chiche, protéine de pomme de terre et combinaisons de celles-ci à une homogénéisation effectuée par un homogénéisateur à haute pression,
a. sécher par atomisation un mélange aqueux gazéifié sous pression comprenant la protéine végétale homogénéisée, et un ou plusieurs hydrates de carbone afin de former une poudre poreuse ayant une température de transition vitreuse, dans lequel le mélange aqueux comprend 3 à 40 % sur une base de poids sec de protéine végétale ;
b. soumettre la poudre poreuse à un gaz sous pression, la poudre poreuse se trouvant à une température au-dessus de sa température de transition vitreuse de telle sorte que les pores fermés présents dans la poudre poreuse sont remplis avec le gaz sous pression ;
c. refroidir la poudre poreuse en dessous de sa température de transition vitreuse ; et
d. relâcher la pression.

2. Procédé selon la revendication 1, dans lequel la poudre poreuse est soumise à une pression comprise entre 10 et 200 bar_{g} et à une température comprise entre 10 et 30 °C au-dessus de la température de transition vitreuse de la poudre poreuse.

3. Procédé selon la revendication 1 ou 2, dans lequel les protéines végétales sont homogénéisées en présence d'hydrates de carbone.
